# EUROPÄISCHE PATENTSCHRIFT

(11) **EP 4 159 014 B1**
(45) Veröffentlichungstag und Bekanntmachung des Hinweises auf die Patenterteilung: **16.04.2025**
(21) Anmeldenummer: 22193579.4
(22) Anmeldetag: 02.09.2022
(51) Int. Cl.: A01B 59/06, B60D 1/04

(54) **KUPPLUNGSEINRICHTUNG FÜR EINEN UNTERLENKER EINES DREIPUNKT-KRAFTHEBERS**
COUPLING DEVICE FOR A LOWER LINK OF A THREE-POINT POWER LIFT
DISPOSITIF D'ACCOUPLEMENT POUR UN BRAS INFÉRIEUR D'UN DISPOSITIF DE LEVAGE À TROIS POINTS

(30) Priorität: 01.10.2021 DE 102021125526
(43) Veröffentlichungstag der Anmeldung: 05.04.2023
(73) Patentinhaber: Deere & Company, Moline, IL 61265 (US)
(72) Erfinder: HEITLINGER, MARTIN, 68163 Mannheim (DE)
(74) Vertreter: Dehnhardt, Florian Christopher

(56) Entgegenhaltungen:
- DE-A1- 2 749 311
- US-A- 4 147 374
- US-A1- 2016 208 845
- US-B2- 9 736 976

## Beschreibung

Die Erfindung betrifft eine Kupplungseinrichtung für einen Unterlenker eines Dreipunkt-Krafthebers, umfassend einen Kupplungskörper mit einem Fanghaken zur Aufnahme eines mit einem Befestigungsbereich des Fanghakens komplementär ausgebildeten Kupplungselements, wobei an dem Fanghaken ein Verschlussmechanismus mit einem Gehäuse angeordnet ist, innerhalb dessen eine Gleitpassung zur längsverschiebbaren Lagerung eines Verschlussriegels derart ausgebildet ist, dass sich der Verschlussriegel entgegen einer rückstellenden Federkraft aus einer den Fanghaken sperrenden ersten Verschlussposition in eine den Fanghaken freigebende zweite Verschlussposition auslenken lässt.

Derartige Kupplungseinrichtungen werden von verschiedenen Herstellern angeboten und weisen üblicherweise einen Verschlussmechanismus mit einem in den Fanghaken eingreifenden Verschlussriegel auf, der sich entgegen einer rückstellenden Federkraft beim Einkuppeln einer von einer Anbaugeräteschnittstelle umfassten Kupplungskugel in eine den Fanghaken freigebende Position verschieben lässt. Sobald die Kupplungskugel ihre Endlage erreicht hat, schnappt der Verschlussriegel unter gleichzeitiger Sperrung des Fanghakens in seine ursprüngliche Position zurück. Die Komponenten des Verschlussmechanismus sind in einem auf einer Oberseite des Fanghakens angeordneten Gehäuse untergebracht, das aus Wartungsgründen zerlegbar aufgebaut und dementsprechend aufwendig herzustellen ist. Das Dokument DE 27 49 311 A1 offenbart eine Dreipunktkupplung, bei der sich Riegelglieder von an den Unterlenkern angeordneten Fanghaken mittels einer einfachen und betriebssicheren Betätigungsvorrichtung gemeinsam über Zugorgane vom Fahrersitz her betätigen lassen.

Es ist Aufgabe der vorliegenden Erfindung, eine Kupplungseinrichtung der eingangs genannten Art hinsichtlich einer vereinfachten Herstellung weiterzuentwickeln.

Diese Aufgabe wird durch eine Kupplungseinrichtung mit den Merkmalen des Patentanspruchs 1 gelöst.

Die Kupplungseinrichtung für einen Unterlenker eines Dreipunkt-Krafthebers umfasst einen Kupplungskörper mit einem Fanghaken zur Aufnahme eines mit einem Befestigungsbereich des Fanghakens komplementär ausgebildeten Kupplungselements, wobei an dem Fanghaken ein Verschlussmechanismus mit einem Gehäuse angeordnet ist, innerhalb dessen eine Gleitpassung zur längsverschiebbaren Lagerung eines Verschlussriegels derart ausgebildet ist, dass sich der Verschlussriegel entgegen einer rückstellenden Federkraft aus einer den Fanghaken sperrenden ersten Verschlussposition in eine den Fanghaken freigebende zweite Verschlussposition auslenken lässt. Erfindungsgemäß ist die Gleitpassung als entlang der Auslenkungsrichtung des Verschlussriegels durchgehende ovalisierte Innenkontur ausgebildet.

Das komplette Gehäuse des Verschlussmechanismus kann in diesem Fall einstückiger Bestandteil des Kupplungskörpers sein, wobei die darin verlaufende Gleitpassung im Wege der CNC-Fräsbearbeitung in einem einzigen Arbeitsgang mit entsprechend hoher Genauigkeit in einen aus geschmiedetem Stahl bestehenden Rohkörper eingebracht werden kann. Die Herstellung der Kupplungseinrichtung lässt sich auf diese Weise maßgeblich vereinfachen.

Der Unterlenker ist Bestandteil eines herkömmlichen Dreipunkt-Krafthebers eines landwirtschaftlichen Traktors. Genauer gesagt sind linke und rechte Unterlenker vorhanden, die symmetrisch zueinander verlaufen und jeweils mit der Kupplungseinrichtung ausgestattet sind. Die beiden Unterlenker sind in einem unteren Bereich eines heckseitigen Differentialgehäuses des landwirtschaftlichen Traktors angelenkt und lassen sich mittels eines hydraulischen Hubwerks auf Veranlassung eines Bedieners anheben und absenken.

Vorteilhafte Weiterbildungen der erfindungsgemäßen Kupplungseinrichtung gehen aus den Unteransprüchen hervor.

Vorzugsweise findet zur Herstellung des Verschlussriegels aus Walz- oder Schmiedestahl bestehende Stangenware Verwendung, die hinsichtlich einer mit der Innenkontur der Gleitpassung korrespondierenden Außenkontur vorgefertigt ist. Der Einsatz vorgefertigter Stangenware erlaubt es, den Verschlussriegel mit besonders geringem Aufwand kostengünstig herzustellen.

An einer dem Befestigungsbereich des Fanghakens abgewandten Gehäuserückseite kann eine Wartungsöffnung eingebracht sein, in die die Gleitpassung als Verlängerung einmündet, sodass sich der Verschlussriegel einschließlich der übrigen Komponenten des Verschlussmechanismus rückwärtig in das Gehäuse einführen und mittels eines abnehmbaren Wartungsdeckels darin verschließen lässt. Hierdurch ergibt sich ein besonders kompakter und robuster Aufbau des Verschlussmechanismus.

Des Weiteren besteht die Möglichkeit, dass an dem Verschlussriegel ein Zughebel angebracht ist, mittels dessen sich der Verschlussriegel von Hand in Richtung der zweiten Verschlussposition auslenken lässt. Der Zughebel bzw. ein daran ausgebildetes Handstück erstreckt sich zu diesem Zweck rückwärtig aus dem Gehäuse bzw. einer in dem abnehmbaren Wartungsdeckel ausgebildeten Austrittöffnung nach außen heraus.

An dem Zughebel kann eine Rastvorrichtung ausgebildet sein, mittels derer sich der Verschlussriegel in der zweiten Verschlussposition arretieren lässt. Bei der Rastvorrichtung handelt es sich im einfachsten Fall um eine entlang des Zughebels ausgebildete Ausnehmung, die in einer Kante der rückwärtigen Austrittsöffnung einhängbar ist. Dies trägt dem Umstand Rechnung, dass an dem Dreipunkt-Kraftheber linke und rechte Unterlenker mit jeweiligen Kupplungseinrichtungen vorgesehen sind und sich die zugehörigen Verschlussmechanismen vom Bediener nicht zur gleichen Zeit betätigen lassen. Die Arretierung erlaubt es, die Verschlussriegel beider Kupplungseinrichtungen in die zweite Verschlussposition zu versetzen, sodass sich die Kupplungselemente einer an dem Dreipunkt-Kraftheber anzubringenden Anbaugeräteschnittstelle leichter synchron in die Fanghaken einführen lassen.

Als Schutz vor Beschädigungen des Verschlussmechanismus, wie sie bei einem plötzlichen Loslassen des Zughebels unter der Wirkung der rückstellenden Federkraft in ausgelenktem Zustand auftreten können, ist es denkbar, dass innerhalb des Gehäuses ein elastisches Anschlagelement zur Begrenzung einer Längsverschiebung des Verschlussriegels in Richtung der ersten Verschlussposition vorgesehen ist. Bei dem elastischen Anschlagelement handelt es sich zum Beispiel um einen in eine innenliegende Gehäusenut eingelegten Elastomerstreifen.

An dem Zughebel kann ein mit dem elastischen Anschlagelement zusammenwirkender Gegenanschlag ausgebildet sein. Die auf den Verschlussriegel wirkende rückstellende Federkraft presst den Gegenanschlag komprimierend gegen das elastische Anschlagelement und definiert so die Lage der ersten Verschlussposition.

Der Gegenanschlag kann am Zughebel als L-förmiger Fortsatz ausgebildet sein.

Ferner besteht die Möglichkeit, dass an dem Verschlussriegel eine dem Befestigungsbereich zugewandte konkave Anlagekontur verläuft, die insbesondere mit einer äußeren Wölbung eines darin aufzunehmenden Kupplungselements korrespondiert. Letzteres trägt insbesondere dem Fall Rechnung, dass es sich bei dem Kupplungselement um eine Kupplungskugel handelt. Steht die Kupplungskugel mit der konkaven Anlagekontur in Kontakt, so wird ein Aufschieben des Verschlussriegels seitens der Kupplungskugel durch die ansteigende Flanke der konkaven Anlagekontur blockiert.

Die konkave Anlagekontur kann an einer einem freien Ende des Verschlussriegels abgewandten Seite derart auslaufen, dass diese den Befestigungsbereich in Auslenkungsrichtung des Verschlussriegels gesehen in einem Abstand schneidet, der kleiner ist als ein Kupplungsdurchmesser des Fanghakens für ein darin aufzunehmendes Kupplungselement. Ein im Fanghaken befindliches Kupplungselement bildet somit einen redundanten Anschlag für den Verschlussriegel in Richtung der ersten Verschlussposition.

Weiterhin ist es denkbar, dass sich der Verschlussriegel unter Freigabe des Befestigungsbereichs ausschließlich senkrecht zu einer durch den Öffnungsverlauf des Fanghakens im Befestigungsbereich festgelegten Aufnahmerichtung aus der ersten Verschlussposition auslenken lässt, wobei der in der ersten Verschlussposition befindliche Verschlussriegel den Befestigungsbereich in der festgelegten Aufnahmerichtung um mehr als die Hälfte sperrend überragt. Befindet sich in dem Befestigungsbereich ein als Kupplungskugel ausgebildetes Kupplungselement, so erstreckt sich der Verschlussriegel dementsprechend über den dem Verschlussriegel in Aufnahmerichtung zugewandten Scheitelpunkt hinaus. Hierdurch lässt sich die Möglichkeit eines Aufschiebens des Verschlussriegels infolge einer Krafteinwirkung des Kupplungselements weitgehend ausschließen. Der so gebildete Verschlussmechanismus macht daher die Notwendigkeit separater Sicherungsmaßnahmen überflüssig.

Finden zur Betätigung des von dem Dreipunkt-Kraftheber umfassten hydraulischen Hubwerks doppeltwirkende Hydraulikzylinder Verwendung, so ist es aufgrund der vorstehend beschriebenen Eigenschaften des Verschlussmechanismus auch ohne weiteres möglich, über die beiden Unterlenker an einem daran angebrachten Bodenbearbeitungsgerät eine nach unten gerichtete Kraft auf den Erdboden auszuüben. Dies ist insofern von Beachtung, als sich die Fanghaken an den Unterlenkern nach oben hin öffnen, mithin nahezu die gesamte aufgewandte Kraft über die Verschlussriegel bzw. den Verschlussmechanismus auf die Kupplungselemente der Anbaugeräteschnittstelle ausgeübt wird.

In dem Verschlussriegel kann des Weiteren eine Ausnehmung zur Aufnahme eines die rückstellende Federkraft erzeugenden Federelements ausgebildet sein, wobei die Ausnehmung mit einer Drainageöffnung zur Flüssigkeitsableitung kommuniziert. Bei letzterer kann es sich um eine in die Gleitpassung mündende Gehäuseöffnung handeln. Eine übermäßige Ansammlung von in den Verschlussmechanismus eindringenden Wassers lässt sich so verlässlich unterbinden, sodass korrosionsbedingte Schäden insbesondere an dem in der Ausnehmung befindlichen Federelement, bei dem es sich üblicherweise um eine aus Stahldraht bestehende schraubenförmigen Druckfeder handelt, vermieden werden können.

Die erfindungsgemäße Kupplungseinrichtung für einen Unterlenker eines Dreipunkt-Krafthebers wird im Folgenden anhand der beigefügten Zeichnungen näher erläutert. Dabei beziehen sich identische Bezugszeichen auf übereinstimmende oder bezüglich ihrer Funktion vergleichbare Komponenten. Es zeigen:
- Fig. 1: eine Schnittdarstellung eines Ausführungsbeispiels der erfindungsgemäßen Kupplungseinrichtung mit einem Kupplungskörper, umfassend einen Fanghaken und einen Verschlussmechanismus zur Arretierung einer darin aufgenommenen Kupplungskugel,
- Fig. 2: eine Detailansicht eines von dem Verschlussmechanismus gemäß Fig. 1 umfassten Verschlussriegels mit einer konkaven Anlagekontur,
- Fig. 3: eine Schnittdarstellung des in Fig. 2 wiedergegebenen Verschlussriegels,
- Fig. 4: eine perspektivische Ansicht der in Fig. 1 gezeigten Kupplungseinrichtung mit einem als Bestandteil des Kupplungskörpers einstückig ausgebildeten Gehäuse des Verschlussmechanismus,
- Fig. 5: eine anhand der Kupplungseinrichtung gemäß Fig. 1 veranschaulichte Betriebssituation, in der ein durch die Kupplungskugel gebildeter redundanter Anschlag für den Verschlussriegel gebildet ist, und
- Fig. 6: ein mit der Kupplungseinrichtung gemäß Fig. 3 ausgestatteter Unterlenker für einen Dreipunkt-Kraftheber eines landwirtschaftlichen Traktors.

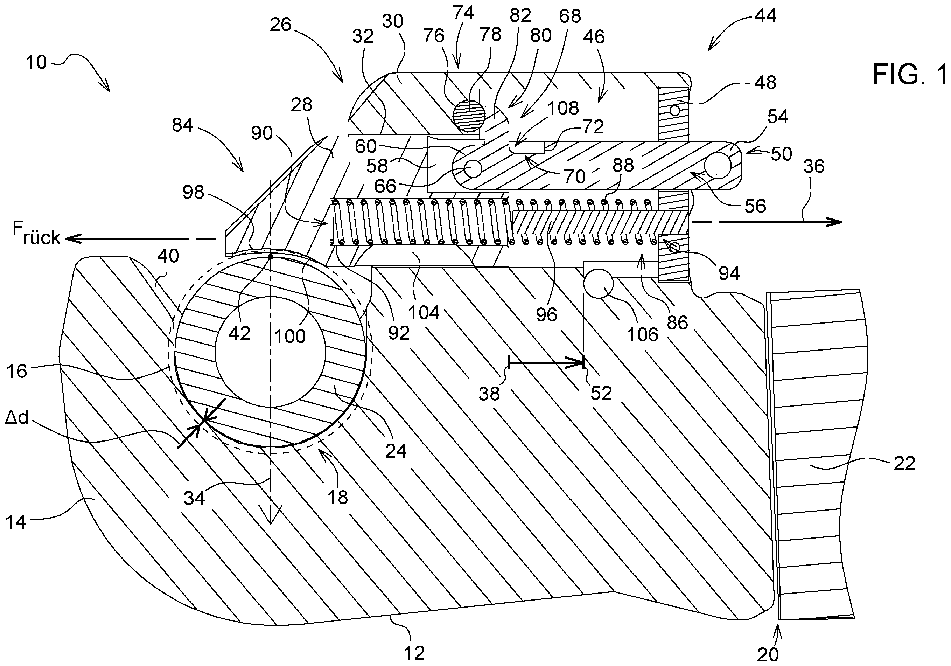

Fig. 1 zeigt ein Ausführungsbeispiel der erfindungsgemäßen Kupplungseinrichtung.

Die Kupplungseinrichtung 10 umfasst einen Kupplungskörper 12 mit einem Fanghaken 14 zur Aufnahme eines mit einem Befestigungsbereich 16 des Fanghakens 14 komplementär ausgebildeten Kupplungselements 18. Der Kupplungskörper 12 ist in einem Endbereich 20 eines Unterlenkers 22 angeschweißt, der Bestandteil eines nicht gezeigten Dreipunkt-Krafthebers eines landwirtschaftlichen Traktors ist. Genauer gesagt weist der Dreipunkt-Kraftheber linke und rechte Unterlenker auf, die symmetrisch zueinander verlaufen und jeweils mit der in Fig. 1 dargestellten Kupplungseinrichtung 10 ausgestattet sind.

Beispielsgemäß befindet sich in dem Befestigungsbereich 16 ein als Kupplungskugel 24 ausgebildetes Kupplungselement 18, das von einer nicht gezeigten Anbaugeräteschnittstelle eines Bodenbearbeitungsgeräts, wie beispielsweise eines Pflugs, einer Egge oder einer Sämaschine, oder aber eines getragenen Anbaugeräts in Gestalt eines Düngerstreuers, eines Spritzgestänges, oder dergleichen umfasst ist.

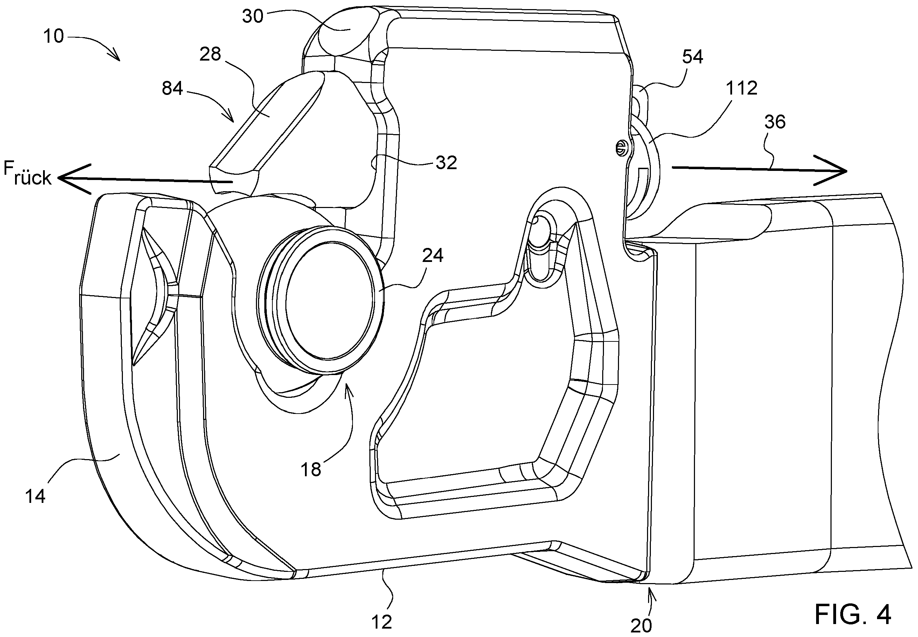

Des Weiteren weist die Kupplungseinrichtung 10 einen Verschlussmechanismus 26 mit einem Verschlussriegel 28 auf. Der Verschlussriegel 28 ist in einer in einem Gehäuse 30 des Verschlussmechanismus 26 ausgebildeten Gleitpassung 32 senkrecht zu einer durch den Öffnungsverlauf des Fanghakens 14 im Befestigungsbereich 16 festgelegten Aufnahmerichtung 34 der Kupplungskugel 24 längsverschiebbar gelagert. Gemäß der perspektivischen Ansicht der Kupplungseinrichtung 10 in Fig. 4 ist die Gleitpassung 32 als entlang der Auslenkungsrichtung 36 des Verschlussriegels 28 durchgehende ovalisierte Innenkontur, die vorliegend einen A-förmig aufgeweiteten Querschnittsverlauf aufweist, ausgebildet. Unter der Wirkung einer rückstellenden Federkraft F_{rück} wird der Verschlussriegel 28 in eine den Fanghaken 14 sperrende erste Verschlussposition 38 gedrängt, sodass die im Befestigungsbereich 16 befindliche Kupplungskugel 24 in dem Fanghaken 14 arretiert wird (siehe hierzu auch Fig. 1).

Der Fanghaken 14 weist einen maulförmigen Aufnahmebereich 40 zur Zentrierung der Kupplungskugel 24 auf, der anschließend in den eigentlichen Befestigungsbereich 16 übergeht. Die Kupplungskugel 24 ist bis auf ein vorgegebenes Lagerspiel Δd komplementär mit dem Befestigungsbereich 16 ausgebildet. Durch den Öffnungsverlauf des Fanghakens 14 im Befestigungsbereich 16 wird die Kupplungskugel 24 entlang der festgelegten Aufnahmerichtung 34 geführt.

Wie in Fig. 1 zu erkennen ist, überragt der in der ersten Verschlussposition 38 befindliche Verschlussriegel 28 den Befestigungsbereich 16 in der festgelegten Aufnahmerichtung 34 sperrend um mehr als die Hälfte. Befindet sich wie hier im Befestigungsbereich 16 ein als Kupplungskugel 24 ausgestaltetes Kupplungselement 18, so erstreckt sich der Verschlussriegel 28 dementsprechend über den dem Verschlussriegel 28 in Aufnahmerichtung 34 zugewandten Scheitelpunkt 42 hinaus.

An einer dem Befestigungsbereich 16 des Fanghakens 14 abgewandten Gehäuserückseite 44 ist eine Wartungsöffnung 46 eingebracht, in die die Gleitpassung 32 als Verlängerung einmündet, sodass sich der Verschlussriegel 28 einschließlich der übrigen (nachfolgend beschriebenen) Komponenten des Verschlussmechanismus 26 rückwärtig in das Gehäuse 30 einführen und mittels eines abnehmbaren Wartungsdeckels 48 darin verschließen lässt.

Genauer gesagt ist das komplette Gehäuse 30 einstückiger Bestandteil des Kupplungskörpers 12, wobei die darin verlaufende Gleitpassung 32 im Wege der CNC-Fräsbearbeitung in einem einzigen Arbeitsgang mit entsprechend hoher Genauigkeit in einen aus geschmiedetem Stahl bestehenden Rohkörper eingebracht wird. Der einstückige Aufbau des Kupplungskörpers 12 ist am besten anhand der in Fig. 4 wiedergegebenen perspektivischen Ansicht der Kupplungseinrichtung 10 erkennbar.

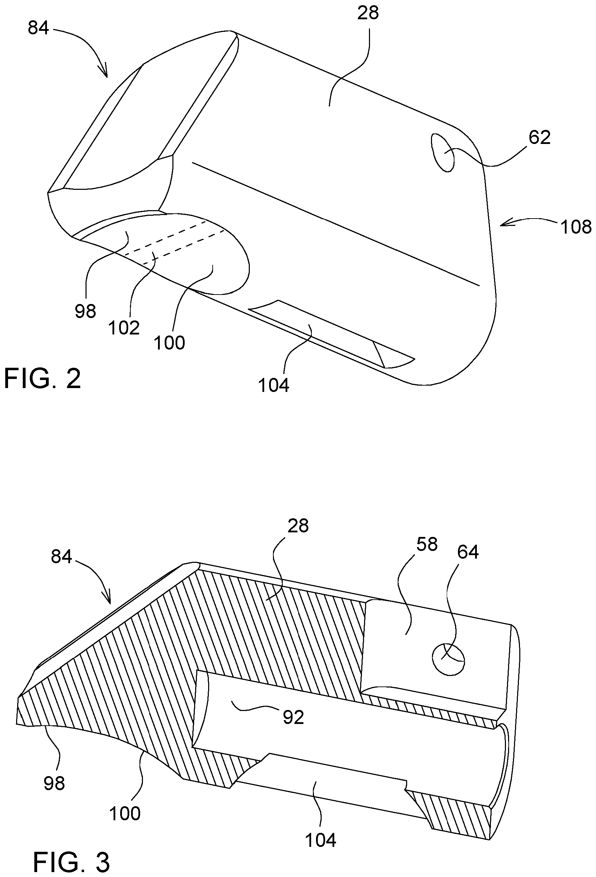

Zur Freigabe der Kupplungskugel 24 lässt sich der Verschlussriegel 28 mittels eines an dem Verschlussriegel 28 gelenkig angebrachten Zughebels 50 entgegen der rückstellenden Federkraft F_{rück} in eine den Fanghaken 14 freigebende zweite Verschlussposition 52 auslenken. Der Zughebel 50 bzw. ein daran ausgebildetes Handstück 54 erstreckt sich zu diesem Zweck rückwärtig aus dem Gehäuse 30 bzw. einer in dem abnehmbaren Wartungsdeckel 48 ausgebildeten Austrittöffnung 56 nach außen heraus. Zur gelenkigen Anbringung weist der Zughebel 50 ein von einer taschenförmigen Ausnehmung 58 des Verschlussriegels 28 aufgenommenes Befestigungsauge 60 auf, das darin mittels eines in gegenüberliegenden Lagerbohrungen 62, 64 (siehe hierzu Fig. 2 und 3) gehaltenen Bolzens 66 drehbar befestigt ist.

Mit anderen Worten ist innerhalb des Gehäuses 30 die Gleitpassung 32 zur längsverschiebbaren Lagerung des Verschlussriegels 28 derart ausgebildet, dass sich der Verschlussriegel 28 entgegen einer rückstellenden Federkraft F_{rück} aus einer den Fanghaken 14 sperrenden ersten Verschlussposition 38 in eine den Fanghaken 14 freigebende zweite Verschlussposition 52 auslenken lässt.

An dem Zughebel 50 ist eine Rastvorrichtung 68 ausgebildet, mittels derer sich der Verschlussriegel 28 in der zweiten Verschlussposition 52 arretieren lässt. Bei der Rastvorrichtung 68 handelt es sich um eine entlang des Zughebels 50 ausgebildete Ausnehmung 70, die in einer Kante 72 der rückwärtigen Austrittsöffnung 56 einhängbar ist.

Als Schutz vor Beschädigungen des Verschlussmechanismus 26 ist innerhalb des Gehäuses 30 ein elastisches Anschlagelement 74 zur Begrenzung einer Längsverschiebung des Verschlussriegels 28 in Richtung der ersten Verschlussposition 38 vorgesehen. Bei dem elastischen Anschlagelement 74 handelt es sich beispielsgemäß um einen in eine innenliegende Gehäusenut 76 eingelegten Elastomerstreifen 78.

Ferner ist an dem Zughebel 50 ein mit dem elastischen Anschlagelement 74 zusammenwirkender Gegenanschlag 80 in Gestalt eines L-förmig hervorspringenden Fortsatzes 82 ausgebildet. Die auf den Verschlussriegel 28 wirkende rückstellende Federkraft F_{rück} presst den Gegenanschlag 80 komprimierend gegen das elastische Anschlagelement 74 und definiert so die Lage der ersten Verschlussposition 38. Die Kompressibilität des zugehörigen Elastomerstreifens 78 ist derart bemessen, dass dieser den am Zughebel 50 ausgebildeten Gegenanschlag 80 in der ersten Verschlussposition 38 außer Kontakt zum angrenzenden Gehäuseabschnitt hält. Der Verschlussriegel 28 ist insofern unter der Wirkung der rückstellenden Federkraft F_{rück} in der ersten Verschlussposition 38 "schwimmend" eingespannt bzw. gelagert.

Der Verschlussriegel 28 ist an einem in Aufnahmerichtung 34 liegenden freien Ende 84 derart abgeschrägt, dass dieser beim Einführen der Kupplungskugel 24 in den Fanghaken 14 in die zweite Verschlussposition 52 gedrängt wird. Sobald die Kupplungskugel 24 ihre endgültige Lage eingenommen hat, kehrt der Verschlussriegel 28 unter der Wirkung der rückstellenden Federkraft F_{rück} von selbst in die erste Verschlussposition 38 zurück. Auf diese Weise ist ein Schnappverschluss verwirklicht, der es erlaubt, den Kuppelvorgang mit einer Anbaugeräteschnittstelle besonders komfortabel durchzuführen.

Wie in der Schnittdarstellung von Fig. 1 zu erkennen ist, wird die rückstellende Federkraft F_{rücx} mittels eines Federelements 86 in Gestalt einer aus Stahldraht bestehenden schraubenförmigen Druckfeder 88 aufgebaut, die mit einem ersten Ende 90 in einem auf einer Innenseite des Verschlussriegels 28 ausgebildeten Sackloch 92 aufgenommen ist und sich mit einem zweiten Ende 94 an dem Wartungsdeckel 48 des Gehäuses 30 abstützt. Innerhalb der Druckfeder 88 verläuft ein an dem Wartungsdeckel 48 angebrachter Führungsstab 96, der sicherstellt, dass die Druckfeder 88 beim Verschieben des Verschlussriegels 28 in Richtung der zweiten Verschlussposition 52 knickfrei komprimiert wird.

Zusätzlich verläuft an dem Verschlussriegel 28 eine dem Befestigungsbereich 16 zugewandte konkave Anlagekontur 98, die mit einer äußeren Wölbung der in dem Befestigungsbereich 16 befindlichen Kupplungskugel 24 korrespondiert. Steht die Kupplungskugel 24 mit der konkaven Anlagekontur 98 in Kontakt, so wird ein Aufschieben des Verschlussriegels 28 seitens der Kupplungskugel 24 durch die ansteigende Flanke 100 der konkaven Anlagekontur 98 blockiert.

Wie bereits erwähnt, weist die Kupplungskugel 24 innerhalb des Befestigungsbereichs 16 ein bestimmtes Lagerspiel Δd auf. Dieses liegt in der Größenordnung von 2 bis 3 Millimetern. Hierdurch wird ein verschmutzungstoleranter "Formschluss" zwischen Kupplungskugel 24 und Verschlussriegel 28 ermöglicht, der auch unter widrigen Umständen ein problemloses Öffnen und Schließen des Verschlussmechanismus 26 sicherstellt.

Fig. 2 zeigt eine Detailansicht des von dem Verschlussmechanismus 26 gemäß Fig. 1 umfassten Verschlussriegels 28. Auf dessen Unterseite ist eine Drainageöffnung 104 zur Flüssigkeitsableitung zu erkennen, die gemäß der Schnittdarstellung in Fig. 3 mit der zur Aufnahme der Druckfeder 88 vorgesehenen Ausnehmung in Gestalt des Sacklochs 92 und in eingebautem Zustand entsprechend Fig. 1 zudem mit einer in die Gleitpassung 32 mündenden äußeren Gehäuseöffnung 106 kommuniziert.

Zur Herstellung des Verschlussriegels 28 findet aus Walz- oder Schmiedestahl bestehende Stangenware Verwendung, die hinsichtlich einer mit der Innenkontur der Gleitpassung 32 korrespondierenden Außenkontur vorgefertigt ist. Während des Fertigungsprozesses wird die Stangenware zunächst passend abgelängt. Anschließend werden die stirnseitigen Konturen sowie sämtliche Ausnehmungen bzw. Bohrungen eingebracht.

Gemäß Fig. 2 ist die konkave Anlagekontur 98 bis auf eine Unterbrechung in Gestalt eines zylindrischen Abschnitts 102 kugelförmig ausgebildet und insoweit an die äußere Wölbung der Kupplungskugel 24 angepasst. Der zylindrische Abschnitt 102 führt gegenüber einer in dem Befestigungsbereich 16 befindlichen Kupplungskugel 24 zu einem gewissen Längsspiel bezüglich der Auslenkungsrichtung 36 des Verschlussriegels 28, das möglichen Passungstoleranzen der Kupplungskugel 24 Rechnung trägt. Die Breite des zylindrischen Abschnitts 102 beträgt hierzu zwischen 3 bis 4 mm.

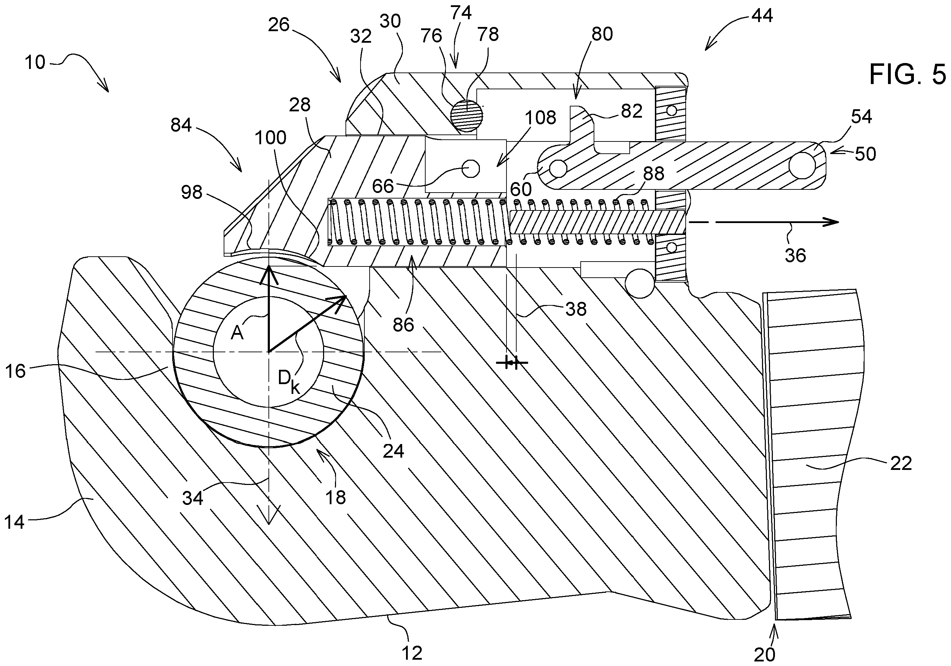

In Fig. 5 ist eine Betriebssituation bei Verlust der drehbaren Befestigung zwischen Verschlussriegel 28 und Zughebel 50 wiedergegeben, beispielsweise im Falle eines Bruchs des Bolzens 66 oder des Befestigungsauges 60. In einem solchen Fall schiebt die Druckfeder 88 den Verschlussriegel 28 über die erste Verschlussposition 38 hinweg aus der Gleitpassung 32 heraus. Um ein Herausfallen des Verschlussriegels 28 zu unterbinden, läuft die konkave Anlagekontur 98 an einer dem freien Ende 84 des Verschlussriegels 28 abgewandten Seite 108 derart aus, dass diese den Befestigungsbereich 16 in Auslenkungsrichtung 36 des Verschlussriegels 28 gesehen in einem Abstand A schneidet, der kleiner ist als der Kupplungsdurchmesser Dₖ des Fanghakens 14 für die darin aufzunehmende bzw. aufgenommene Kupplungskugel 24. Die im Fanghaken 14 befindliche Kupplungskugel 24 bildet somit einen redundanten Anschlag für den Verschlussriegel 28 in Richtung der ersten Verschlussposition 38.

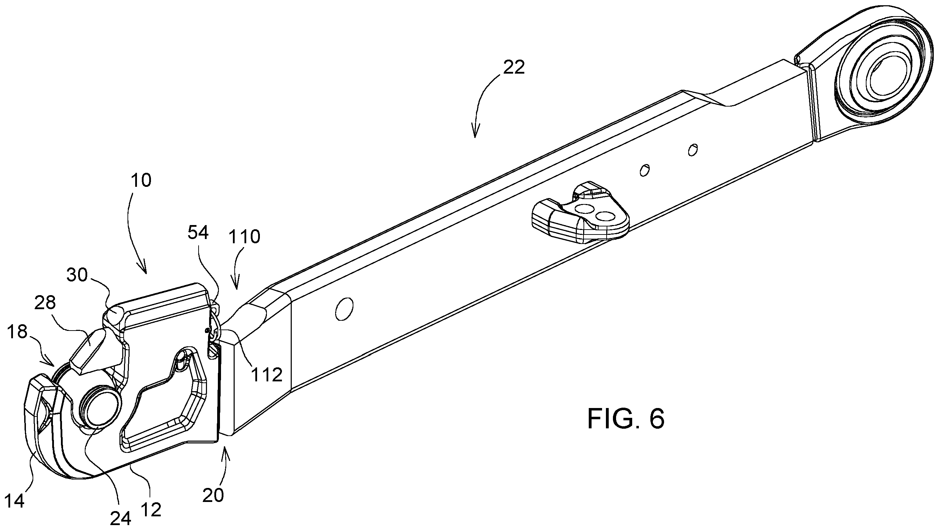

In Fig. 6 ist der mit der Kupplungseinrichtung 10 ausgestattete Unterlenker 22 Unterlenker abgebildet. Dieser ist als 3D-geformtes Stahlschmiedeteil ausgebildet. Ein freier Bereich 110 erlaubt einen problemlosen Zugriff auf den Verschlussmechanismus 26 bzw. den zu dessen Betätigung vorgesehenen Zughebel 50.

Um eine Betätigung des Zughebels 50 zu erleichtern, verläuft durch eine an dem Handstück 54 vorgesehene Öse ein Betätigungsring 112. Durch den Betätigungsring 112 ist beispielsweise ein Schraubenzieher hindurchführbar, dessen Klinge sich am Unterlenker 22 abstützen und so als Hebel verwenden lässt.

## Patentansprüche

1. Kupplungseinrichtung für einen Unterlenker eines Dreipunkt-Krafthebers, umfassend einen Kupplungskörper (12) mit einem Fanghaken (14) zur Aufnahme eines mit einem Befestigungsbereich (16) des Fanghakens (14) komplementär ausgebildeten Kupplungselements (18), wobei an dem Fanghaken (14) ein Verschlussmechanismus (26) mit einem Gehäuse (30) angeordnet ist, innerhalb dessen eine Gleitpassung (32) zur längsverschiebbaren Lagerung eines Verschlussriegels (28) derart ausgebildet ist, dass sich der Verschlussriegel (28) entgegen einer rückstellenden Federkraft (F_{rück}) aus einer den Fanghaken (14) sperrenden ersten Verschlussposition (38) in eine den Fanghaken (14) freigebende zweite Verschlussposition (52) auslenken lässt, **dadurch gekennzeichnet, dass** die Gleitpassung (32) als entlang der Auslenkungsrichtung (36) des Verschlussriegels (28) durchgehende ovalisierte Innenkontur ausgebildet ist.

2. Kupplungseinrichtung nach Anspruch 1, **dadurch gekennzeichnet, dass** zur Herstellung des Verschlussriegels (28) aus Walz- oder Schmiedestahl bestehende Stangenware Verwendung findet, die hinsichtlich einer mit der Innenkontur der Gleitpassung (32) korrespondierenden Außenkontur vorgefertigt ist.

3. Kupplungseinrichtung nach Anspruch 1 oder 2, **dadurch gekennzeichnet, dass** an einer dem Befestigungsbereich (16) des Fanghakens (14) abgewandten Gehäuserückseite (44) eine Wartungsöffnung (46) eingebracht ist, in die die Gleitpassung (32) als Verlängerung einmündet.

4. Kupplungseinrichtung nach wenigstens einem der vorhergehenden Ansprüche, **dadurch gekennzeichnet, dass** an dem Verschlussriegel (28) ein Zughebel (50) angebracht ist, mittels dessen sich der Verschlussriegel (28) von Hand in Richtung der zweiten Verschlussposition (52) auslenken lässt.

5. Kupplungseinrichtung nach Anspruch 4, **dadurch gekennzeichnet, dass** an dem Zughebel (50) eine Rastvorrichtung (68) ausgebildet ist, mittels derer sich der Verschlussriegel (28) in der zweiten Verschlussposition (52) arretieren lässt.

6. Kupplungseinrichtung Anspruch 4 oder 5, **dadurch gekennzeichnet, dass** innerhalb des Gehäuses (30) ein elastisches Anschlagelement (74) zur Begrenzung einer Längsverschiebung des Verschlussriegels (28) in Richtung der ersten Verschlussposition (38) vorgesehen ist.

7. Kupplungseinrichtung nach Anspruch 6, **dadurch gekennzeichnet, dass** an dem Zughebel (50) ein mit dem elastischen Anschlagelement (74) zusammenwirkender Gegenanschlag (80) ausgebildet ist.

8. Kupplungseinrichtung nach Anspruch 7, **dadurch gekennzeichnet, dass** an dem Verschlussriegel (28) eine dem Befestigungsbereich (16) zugewandte konkave Anlagekontur (98) verläuft, die insbesondere mit einer äußeren Wölbung eines darin aufzunehmenden Kupplungselements (18) korrespondiert.

9. Kupplungseinrichtung nach Anspruch 8, **dadurch gekennzeichnet, dass** die konkave Anlagekontur (98) an einer einem freien Ende (84) des Verschlussriegels (28) abgewandten Seite (108) derart ausläuft, dass diese den Befestigungsbereich (16) in Auslenkungsrichtung (36) des Verschlussriegels (28) gesehen in einem Abstand (A) schneidet, der kleiner ist als ein Kupplungsdurchmesser (Dₖ) des Fanghakens (14) für ein darin aufzunehmendes Kupplungselement (18).

10. Kupplungseinrichtung nach wenigstens einem der vorhergehenden Ansprüche, **dadurch gekennzeichnet, dass** sich der Verschlussriegel (28) unter Freigabe des Befestigungsbereichs (16) ausschließlich senkrecht zu einer durch den Öffnungsverlauf des Fanghakens (14) im Befestigungsbereich (16) festgelegten Aufnahmerichtung (34) aus der ersten Verschlussposition (38) auslenken lässt, wobei der in der ersten Verschlussposition (38) befindliche Verschlussriegel (28) den Befestigungsbereich (16) in der festgelegten Aufnahmerichtung (34) um mehr als die Hälfte sperrend überragt.

11. Kupplungseinrichtung nach wenigstens einem der vorhergehenden Ansprüche, **dadurch gekennzeichnet**, in dem Verschlussriegel (28) eine Ausnehmung (92) zur Aufnahme eines die rückstellende Federkraft (F_{rück}) erzeugenden Federelements (86) ausgebildet ist, wobei die Ausnehmung (92) mit einer Drainageöffnung (104) zur Flüssigkeitsableitung kommuniziert.

## Claims

1. Coupling device for a lower link of a three-point linkage, comprising a coupling body (12) with a catch hook (14) for receiving a coupling element (18) of complementary design to a fastening region (16) of the catch hook (14), wherein disposed on the catch hook (14) is a locking mechanism (26) having a housing (30) within which a sliding fit (32) for mounting a locking latch (28) so as to be longitudinally displaceable is formed in such a manner that the locking latch (28) is able to be deflected, counter to a restoring spring force (Fᵣₑₛₜₒᵣₑ), from a first locking position (38) blocking the catch hook (14) to a second locking position (52) releasing the catch hook (14), **characterized in that** the sliding fit (32) is formed as an internal contour which is continuously ovalized along the deflection direction (36) of the locking latch (28).

2. Coupling device according to Claim 1, **characterized in that** for the production of the locking latch (28) of rolled or forged steel existing bar stock is used, which is prefabricated in terms of an external contour so as to correspond to the internal contour of the sliding fit (32).

3. Coupling device according to Claim 1 or 2, **characterized in that** a service opening (46), into which the sliding fit (32) opens as an extension, is incorporated in a housing rear side (44) facing away from the fastening region (16) of the catch hook (14).

4. Coupling device according to at least one of the preceding claims, **characterized in that** a pull lever (50) is attached to the locking latch (28), by means of which the locking latch (28) is able to be deflected manually in the direction of the second locking position (52).

5. Coupling device according to Claim 4, **characterized in that** a latching device (68), by means of which the locking latch (28) can be retained in the second locking position (52), is formed on the pull lever (50).

6. Coupling device according to Claim 4 or 5, **characterized in that** an elastic stop element (74) for delimiting a longitudinal displacement of the locking latch (28) in the direction of the first locking position (38) is provided within the housing (30).

7. Coupling device according to Claim 6, **characterized in that** a counterstop (80) which interacts with the elastic stop element (74) is formed on the pull lever (50).

8. Coupling device according to Claim 7, **characterized in that** a concave contact contour (98), which faces the fastening region (16) and corresponds, in particular, to an outer curvature of a coupling element (18) to be received therein, is formed on the locking latch (28).

9. Coupling device according to Claim 8, **characterized in that** the concave contact contour (98) on a side (108) facing away from a free end (84) of the locking latch (28) runs out in such a manner that it intersects the fastening region (16) in the deflection direction (36) of the locking latch (28) at a spacing (A) smaller than a coupling diameter (Dₖ) of the catch hook (14) for a coupling element (18) to be received therein.

10. Coupling device according to at least one of the preceding claims, **characterized in that** the locking latch (28), while releasing the fastening region (16), is able to be deflected from the first locking position (38) exclusively perpendicularly to a receiving direction (34) defined by the opening course of the catch hook (14) in the fastening region (16), wherein the locking latch (28) when located in the first locking position (38) protrudes in a locking manner beyond the fastening region (16) by more than half in the defined receiving direction (34).

11. Coupling device according to at least one of the preceding claims, **characterized in that** a recess (92) for receiving a spring element (86) generating the restoring spring force (Fᵣₑₛₜₒᵣₑ) is formed in the locking latch (28), wherein the recess (92) communicates with a drainage opening (104) for discharging liquid.

## Revendications

1. Dispositif d'accouplement pour un bras inférieur d'un dispositif de levage à trois points, comprenant un corps d'accouplement (12) avec un crochet d'arrêt (14) destiné à recevoir un élément d'accouplement (18) réalisé de forme complémentaire à une zone de fixation (16) du crochet d'arrêt (14), un mécanisme de fermeture (26) avec un boîtier (30) étant agencé sur le crochet d'arrêt (14), à l'intérieur duquel est réalisé un ajustement coulissant (32) pour le montage mobile longitudinalement d'un verrou de fermeture (28) de telle sorte que le verrou de fermeture (28) peut être dévié, à l'encontre d'une force élastique de rappel (Fᵣₐₚₚₑₗ), d'une première position de fermeture (38) bloquant le crochet d'arrêt (14) dans une deuxième position de fermeture (52) libérant le crochet d'arrêt (14), **caractérisé en ce que** l'ajustement coulissant (32) est réalisé sous forme de contour intérieur ovalisé continu le long de la direction de déviation (36) du verrou de fermeture (28).

2. Dispositif d'accouplement selon la revendication 1, **caractérisé en ce que**, pour la fabrication du verrou de fermeture (28), on utilise des barres constituées d'acier laminé ou forgé qui sont préfabriquées en ce qui concerne un contour extérieur correspondant au contour intérieur de l'ajustement coulissant (32).

3. Dispositif d'accouplement selon la revendication 1 ou 2, **caractérisé en ce qu'**une ouverture de maintenance (46), dans laquelle l'ajustement coulissant (32) débouche en tant que prolongement, est ménagée sur un côté arrière (44) du boîtier détourné de la zone de fixation (16) du crochet d'arrêt (14).

4. Dispositif d'accouplement selon au moins l'une quelconque des revendications précédentes, **caractérisé en ce qu'**un levier de traction (50) est disposé sur le verrou de fermeture (28), au moyen duquel le verrou de fermeture (28) peut être dévié manuellement en direction de la deuxième position de fermeture (52).

5. Dispositif d'accouplement selon la revendication 4, **caractérisé en ce qu'**un dispositif d'encliquetage (68) est réalisé sur le levier de traction (50), au moyen duquel le verrou de fermeture (28) peut être bloqué dans la deuxième position de fermeture (52).

6. Dispositif d'accouplement revendication 4 ou 5, **caractérisé en ce qu'**un élément de butée élastique (74) est prévu à l'intérieur du boîtier (30) pour limiter un déplacement longitudinal du verrou de fermeture (28) en direction de la première position de fermeture (38).

7. Dispositif d'accouplement selon la revendication 6, **caractérisé en ce qu'**une contre-butée (80) coopérant avec l'élément de butée élastique (74) est réalisée sur le levier de traction (50).

8. Dispositif d'accouplement selon la revendication 7, **caractérisé en ce que** sur le verrou de fermeture (28) s'étend un contour d'appui concave (98) tourné vers la zone de fixation (16), qui correspond notamment à une courbure extérieure d'un élément d'accouplement (18) devant y être reçu.

9. Dispositif d'accouplement selon la revendication 8, **caractérisé en ce que** le contour d'appui concave (98) se termine sur un côté (108) détourné d'une extrémité libre (84) du verrou de fermeture (28) de telle sorte que celui-ci coupe la zone de fixation (16), vu dans la direction de déviation (36) du verrou de fermeture (28), à une distance (A) qui est inférieure à un diamètre d'accouplement (Dₖ) du crochet d'arrêt (14) pour un élément d'accouplement (18) devant y être reçu.

10. Dispositif d'accouplement selon au moins l'une quelconque des revendications précédentes, **caractérisé en ce que** le verrou de fermeture (28) peut être dévié de la première position de fermeture (38) en libérant la zone de fixation (16) exclusivement perpendiculairement à une direction de réception (34) définie par le tracé d'ouverture du crochet d'arrêt (14) dans la zone de fixation (16), le verrou de fermeture (28) qui se trouve dans la première position de fermeture (38) dépassant de la zone de fixation (16) de plus de la moitié en la bloquant dans la direction de réception (34) définie.

11. Dispositif d'accouplement selon au moins l'une quelconque des revendications précédentes, **caractérisé en ce qu'**un évidement (92) est réalisé dans le verrou de fermeture (28) pour recevoir un élément élastique (86) générant la force élastique de rappel (Fᵣₐₚₚₑₗ), l'évidement (92) communiquant avec une ouverture de drainage (104) pour l'évacuation de liquide.
